# EUROPEAN PATENT SPECIFICATION

(11) **EP 1 821 018 B1**
(45) Date of publication and mention of the grant of the patent: **17.05.2017**
(21) Application number: 04822612.0
(22) Date of filing: 18.11.2004
(51) Int. Cl.: F16K 31/68, F01P 7/16, G01K 5/44

(54) **THERMOSTAT DEVICE**
THERMOSTATVORRICHTUNG
DISPOSITIF THERMOSTATIQUE

(43) Date of publication of application: 22.08.2007
(73) Proprietor: Nippon Thermostat Co., Ltd., Kiyose-shi, Tokyo 204-0003 (JP)
(72) Inventor: YAJIMA, Noriyasu, Kiyose-shi, Tokyo 204-0003 (JP)
(74) Representative: Jannig, Peter
(86) International application number: PCT/JP2004/017198
(87) International publication number: WO 2006/054347

(56) References cited:
- EP-A2- 0 947 676
- DE-U1- 9 204 611
- DE-U1- 20 023 115
- FR-A1- 2 811 372
- FR-A5- 2 127 707
- JP-A- 07 305 787
- JP-A- 10 019 160
- JP-A- 2000 213 351
- JP-A- 2000 213 353
- JP-A- 2002 038 950

## Description

### TECHNICAL FIELD

The present invention relates to a thermostat for variably controlling water temperature in, for example, a cooling water temperature control system for variably controlling the cooling water temperature of an internal combustion engine (hereinafter referred to as an engine) used in an automobile or the like.

### BACKGROUND ART

Thermostats arranged in, for example, the cooling water system of an engine or the like comprise a thermoelement with a built-in thermally-expanding body that expands and contracts in response to detected changes in temperature of the cooling water flowing in a circulatory passage. These thermostats function to maintain the cooling water at a prescribed temperature based on the opening and closing of a valve as a result of volumetric change that accompanies the expansion and contraction of the thermally-expanding body.

In conventional thermostats a frame for covering the thermoelement is formed from metal, the frame being assembled by, for example, the coupling of upper and lower frame members by caulking or welding.

Therefore, conventional thermostats are high in cost and take time to assemble. There is an additional problem in that, if it is determined through characteristic testing following assembly that the thermoelement is unsuitable, the frame cannot be easily disassembled and the replacement of the element takes time.

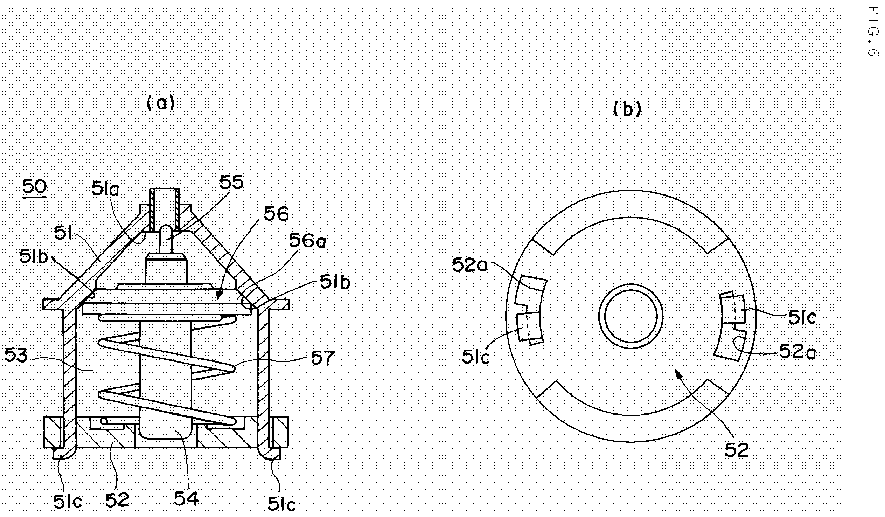

Cited reference 1 (Japanese Laid-Open Utility Model Application No. S52-64243) discloses an example structure of an easily assembled and disassembled thermostat designed with these problems in mind. Fig. 6 shows an example configuration of the thermostat of cited reference 1. Fig. 6(a) is a front elevational view of the thermostat, and Fig. 6(b) is a plan view thereof as seen from below.

As shown in Fig. 6(a), a thermostat 50 comprises a temperature-sensitive thermoelement 54 interposed in an opposing gap 53 between an opposingly provided upper frame 51 and disk-shaped lower frame 52. A piston 55 is provided to protrude from the upper end of the thermoelement 54, the piston 55 engaging with an apex part inner-side surface 51a of the upper frame 51. In addition, a flanged valve 56 is formed on the outer perimeter surface of the thermoelement 54, an outer perimeter bevel-edged surface 56a thereof being elastically pressure-contacted against an inner perimeter surface 51b of the upper frame 51 by a coil spring 57 provided on the inner surface of the lower frame 52.

In addition, latch hooks 51c are formed in the lower end part of the upper frame 51 and, as shown in Fig. 6(b), latch slits 52a are formed in the lower frame 52. These latch slits 52a have an opening that is larger than the latch hooks 51c and, continuously therewith in the circumferential direction, an opening part that is smaller than the latch hooks 51c. Therefore, the upper and lower frames can be easily assembled by an operation in which the coil spring 57 is pressed to introduce the latch hooks 51c into the latch slits 52a and the upper frame 51 or lower frame 52 are slightly turned. Disassembly can be performed similarly easily by an operation in which the upper frame 51 and lower frame 52 are slightly turned.

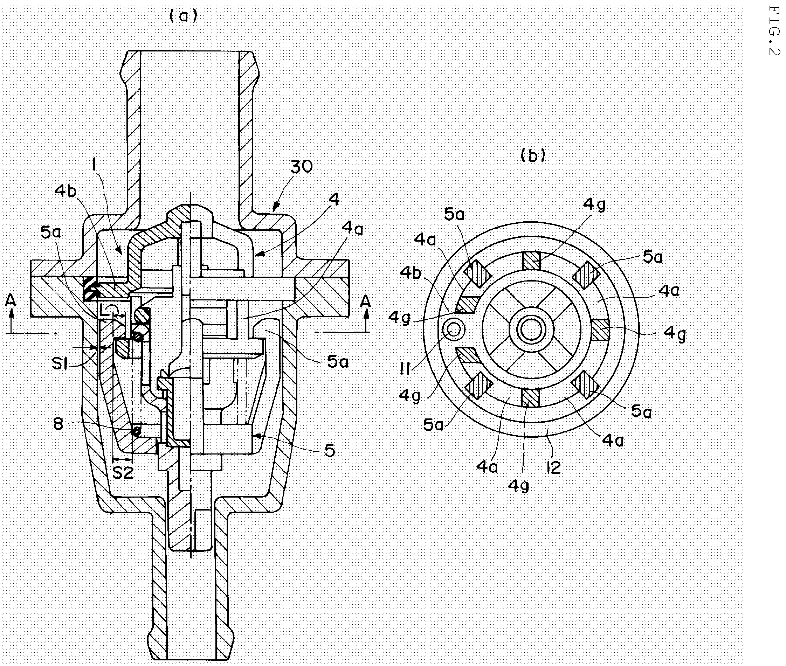

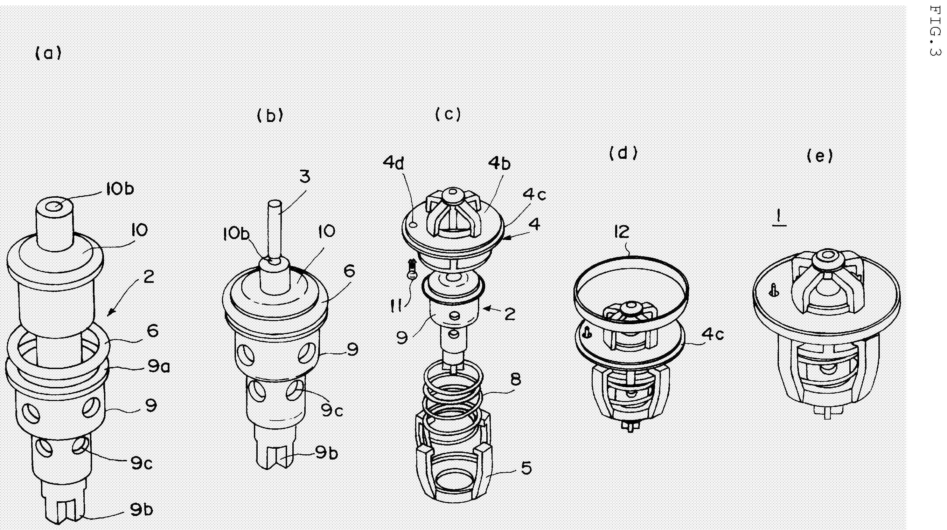

According to the configuration of cited reference 1 described above, the structure is assembled by latching dispensing with the conventionally performed steps of caulking and welding. Accordingly, because the assembly and disassembly thereof can be performed comparatively easily, productivity is improved and, if it is determined through characteristic testing following assembly that the thermoelement is unsuitable, the frame can be easily disassembled in order to replace the element, and a uniformity of product characteristics can be easily achieved. [Cited reference 1] Japanese Laid-Open Utility Model Application No. S52-64243 (page 4 line 2 to page 5 line 5, and Figs. 2 and 3)

However, the frame for covering the thermoelement formed from metal of conventional thermostats described above is a primary cause of the increased weight and increased cost of the thermostat.

Although not mentioned in cited reference 1, in conventional thermostats a rubber member for improving the valve characteristics is formed on the outer perimeter bevel-edged surface of the flanged valve by annealing or the like and, therefore, the forming of the flanged valve member takes time and the production efficiency is poor.

Further prior art is disclosed in documents FR 2 127 707 A5, EP 0 947 676 A2, FR 2 811 372, DE 92 04 611 U1, and DE 200 23 115 U1. The thermostat described in document FR 2 127 707 A5 is a thermostat according to the preamble of claim 1.

### DISCLOSURE OF THE INVENTION

With the foregoing conditions in mind, it is an object of the present invention to provide a thermostat of reduced weight and cost that can be easily assembled and disassembled.

According to the present invention this object is achieved by the thermostats claimed in claim 1.

The thermostat pertaining to the present invention for resolving the problems described above constitutes a thermostat installed in a housing that is connected to a plurality of passages through which a cooling water flows, the passages being linked or blocked by the actuation of a valve in response to temperature changes of the cooling water, characterized in that it comprises: a thermoelement having a piston that slides up and down as a result of the temperature changes and a flanged valve in its perimeter edge, the flanged valve being actuated by the advancing and retreating action of the piston; a spring which is arranged so as to surround the thermoelement and one end of which elastically pressure-contacts the rear side of the flanged valve; an upper frame in which a valve seat that abuts against the upper side of the flanged valve is formed; and a lower frame that is pressure-contacted by the other end of the spring, wherein latch frames are formed in the upper frame and a plurality of latch hooks that latch to the latch frames are formed in the lower frame, the upper frame and lower frame being integrally formed by forming at least the lower frame from an elastic material and utilizing the elasticity to latch and fix the latch hooks to the latch frames.

Because the upper and lower frames are formed from an elastic material (for example, a material formed by the press-molding of a resin or thin metal plate or the like) and are latched and fixed utilizing this elasticity in this way, the thermostat can be easily assembled and disassembled. Productivity is improved as a result and, if it is determined through characteristic testing following assembly that the thermoelement is unsuitable, the frame can be easily disassembled in order to replace the element, and a uniformity of product characteristics can be easily achieved.

In addition, compared with a conventional frame made of metal, the forming of the upper and lower frame from a material formed by the press-molding of, for example, a resin or metal thin plate results in the reduced weight and cost of the thermostat.

In addition, the thermolement comprises an element main body in which a stepped part is formed in the perimeter edge thereof, and an O-ring attached to the perimeter surface of the element main body in a state of abutting against the stepped part, the flanged valve being desirably configured from at least the stepped part and the O-ring.

Employing a rubber O-ring for the valve in this way produces easier assembly and better productivity by comparison with conventional thermostats based on the annealing of a rubber member.

In addition, the thermoelement further comprises a spring holder provided in the spring, the spring holder having a flanged spring-receiving part against which one end of the spring abuts, and the flanged valve being desirably configured from the stepped part, the spring-receiving part and the O-ring provided between the stepped part and the spring-receiving part. In addition, the width dimension of the spring-receiving part of the spring holder is preferably substantially identical to the diameter dimension of the O-ring.

Because a spring-receiving part is interposed between the O-ring and the spring in this way, the elastic forces of the spring are not exerted directly on the O-ring and, instead, the elastic forces on the O-ring are uniformized by the spring-receiving part to ensure the prevention of non-uniform deformation of the O-ring. That is to say, leak of the cooling water when the valve is opened is prevented by the uniform crushing of the O-ring as per the design value and, as a result, it is able to be stably used for a long period.

In addition, it is desirable for the length dimension of the latch hooks formed in the lower frame in the state in which the upper frame and the lower frame are latched to be larger than the gap dimension between the lower frame and the inner wall of the housing. In addition, it is preferable for the length dimension of the latch hooks formed in the lower frame in a state in which the upper frame and the frame are latched to be less than the maximum gap between the spring and the lower frame.

By the regulating forming of the length dimension of the latch hooks in this way, release of the latching between the upper frame and lower frame when the thermostat is installed in the housing can be prevented.

In addition, a jiggle valve for removing air bubbles is provided in the upper frame, and it is desirable that when one latch hook of the lower frame is latched to a position in which it is in contact with the jiggle valve of the upper frame, the other latch hooks abut against the latch frames but do not latch thereto.

When a latch hook is latched to a position in which it is contact with the jiggle valve in this way, that is to say, to a position that prevents the jiggle valve from actuating normally, the upper frame and lower frame cannot be assembled. This ensures that the upper and lower frame are correctly assembled and, this being the case, that the jiggle valve is reliably actuated.

In addition, it is desirable that a plurality of communication holes that allow contact of the cooling water against the element main body be formed in the spring holder.

This allows cooling water to contact the element main body by way of the communication holes and improves the temperature-sensitive precision of the thermoelement. Altering the diameter of these communication holes changes the responsivity of the thermoelement, and by adjusting this dimension thermostats of a variety of responsivities can be manufactured.

According to the present invention, a thermostat of reduced weight and cost that can be easily assembled and disassembled can be provided.

### BRIEF DESCRIPTION OF THE DRAWINGS

Fig. 1 is a partial cross-sectional view of one configuration of the thermostat pertaining to the present invention;
Fig. 2 is a diagram showing a state in which the thermostat of Fig. 1 is installed in a housing;
Fig. 3 is an assembly process diagram of the thermostat of Fig. 1;
Fig. 4 is a diagram showing the actuation of the thermostat of Fig. 1;
Fig. 5 is a front elevational view of another configuration of the thermostat pertaining to the present invention; and
Fig. 6 is a diagram showing the configuration of a conventional thermostat.

### BEST MODE FOR CARRYING OUT THE INVENTION

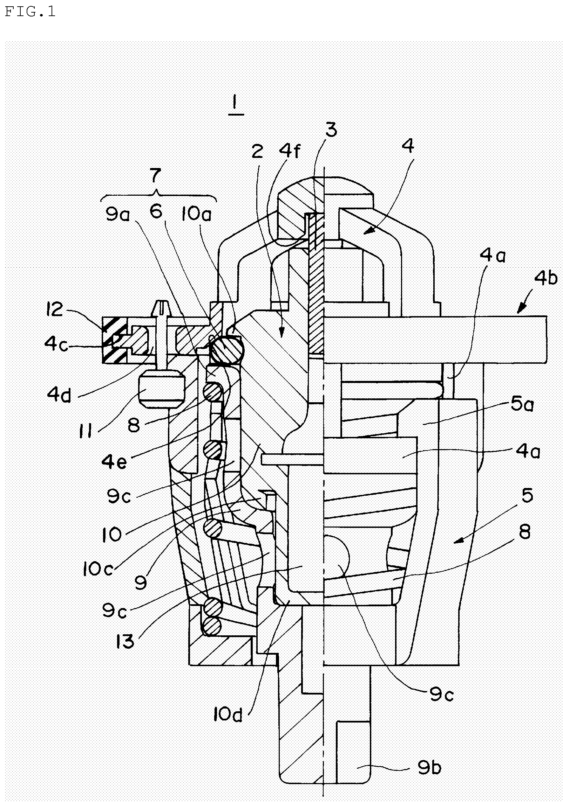

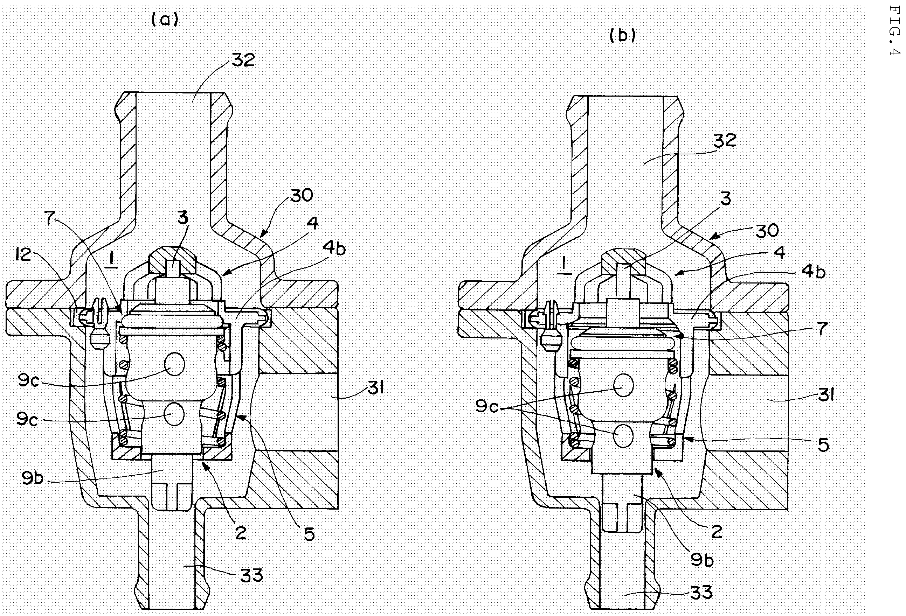

The embodiments of the present invention will be described hereinafter with reference to the drawings. Fig. 1 is a partial cross-sectional view of one configuration of the thermostat pertaining to the present invention; Fig. 2 is a diagram showing a state in which the thermostat of Fig. 1 is installed in a housing; Fig. 3 is an assembly process diagram of the thermostat of Fig. 1; and Fig. 4 is a diagram showing the actuation of the thermostat of Fig. 1.

The thermostat 1 shown in Fig. 1 is configured from a thermoelement 2 that actuates a valve based on detected changes in temperature of the cooling water, an upper frame 4 and lower frame 5 that cover the thermoelement 2, and a spring 8 which surrounds the thermoelement 2 and is arranged within the frames. The upper frame 4 and lower frame 5 are formed from an elastic material (for example, a material produced by the press-molding of a resin or a metal thin plate or the like).

The thermoelement 2 comprises an element main body 10 made of metal with a built-in thermally-expanding body 13 that expands and contracts as a result of changes in temperature, and a piston 3 that protrudes from the upper end of the element main body 10 and slides up and down as a result of changes in the thermally-expanding body 13. The upper end of the piston 3 engages with an apex part inner-side surface 4f of the upper frame 4.

An O-ring 6 is attached to the inner surface of the thermoelement 2, and a spring holder 9 made of resin that roughly covers the element main body 10 is attached therebelow.

In a more detailed description thereof, a stepped part 10a is formed in the perimeter edge of the element main body 10, the O-ring 6 being attached in such a way as to abut the stepped part 10a. In addition, a flanged spring-receiving part 9a that is pressure-contacted by one end of the spring 8 is formed in a spring holder 9 that covers the lower part of the element main body 10. The flanged valve 7 is configured from the stepped part 10a, the O-ring 6 and the spring-receiving part 9a.

The width dimension of the spring-receiving part 9a of the spring holder 9 is formed to be substantially identical to the diameter dimension (diameter) of the O-ring 6.

As shown in the drawing, the O-ring 6 is fixed between the spring-receiving part 9a and the stepped part 10a by the elastic forces of the spring 8. Furthermore, when the element main body 10 and spring holder 9 are assembled, the inner-side surface of the spring holder 9 abuts against corner parts 10c, 10d formed in the perimeter of the element main body 10. By the adopting of this configuration, the elastic forces of the spring 8 are not directly exerted on the O-ring 6 and, instead, the elastic forces on the O-ring 6 are uniformized by the spring-receiving part 9a to ensure the crush width of the O-ring 6 is constant and prevent non-uniform deformation of the O-ring 6.

Even though the O-ring 6 is not fixed to the element main body 10 by welding or annealing, it is fixed to the element main body 10 by the water pressure of the cooling water. This alleviates any fear of the O-ring 6 releasing from the element main body 10.

In addition, there are no particular restrictions to the cross-sectional shape of the O-ring 6 described in this embodiment and, for example, it may be rectangular in cross-section.

In addition, when the thermostat 1 is installed in the housing, a flange 4b that divides the housing roughly into two is formed in the upper frame 4. A protruding part 4c is formed along the entire perimeter of the perimeter edge of the flange 4b, and a rubber ring 12 for improving sealablity is attached to this protruding part 4c. Furthermore, a valve seat 4e that abuts against the upper side of the flanged valve 7 in the closed valve state is formed in the center of the flange 4b.

As is described above, the spring 8 is arranged so as to surround the thermoelement 2 and one end thereof elastically abuts against the rear side of the flanged valve 7, while the other end thereof pressure-contacts the base surface of the lower frame 5. Therefore, when the piston 3 is in the contracted state, the flanged valve 7 is pressure-attached against the valve seat 4e and closed by the elastic forces of the spring 8. On the other hand, the flanged valve 7 is separated from the valve seat 4e and opened by the expansion of the thermally-expanding body 13, the extension of the piston 3, and the pressing of the element main body 10 downward.

Because the diameter (outer diameter) of the spring 8 is formed to be substantially identical to the diameter of the flanged valve 7, sliding discrepancies caused by tilting of the flanged valve 7 can be prevented and stable valve actuation is ensured.

In addition, a plurality of latch frames 4a (four in this embodiment) are formed in the lower surface of the flange 4b of the upper frame 4, and latch hooks 5a that latch to the latch frames 4a are formed in the lower frame 5. As is described above, the upper frame 4 and lower frame 5 are integrally formed by the forming of the lower frame 5 from an elastic material and the utilizing of this elasticity to latch and fix the latch hooks 5a to the latch frames 4a.

A plurality of communication holes 9c that allow contact of the cooling water against the element main body 10 are formed in the spring holder 9. The cooling water contacts the element main body 10 by way of the communication holes 9c which improves the temperature-sensitive precision of the thermoelement 2.

In addition, a bypass valve 9b which, when actuated in the closed valve state by the flanged valve 7, allows cooling water to flow from the engine side into a bypass passage directly linked to the engine side and, when actuated in the opened valve state, which closes this bypass passage is formed in the spring holder 9.

In addition, a hole 4d connecting from top to bottom is formed in the flange 4b, and a jiggle valve 11 whose function is to remove air bubbles is provided in this hole.

The latch part between the upper frame 4 and lower frame 5 will be described in further detail with reference to Fig. 2.

Fig. 2(a) is a partial cross-sectional view of a thermostat 1 installed in a housing 30, and Fig. 2(b) is a plan view along A-A of Fig. 2(a). The jiggle valve 11 has been omitted from Fig. 2(a).

As shown in Fig. 2(a), in the state in which the upper frame 4 and the lower frame 5 are latched, a length dimension L of the latch hooks 5a formed in the lower frame 5 is larger than a gap dimension S1 between the lower frame 5 and inner wall of the housing 30.

Furthermore, the length dimension L of the latch hooks 5a is less than a maximum gap dimension S2 between the spring 8 and lower frame 5.

That is to say, the forming of the latch hooks 5a in a prescribed length dimension in this way facilitates easier assembly of the thermostat 1 and prevents release of the latching between the upper frame 4 and lower frame 5 within the housing 30.

The embodiment is not restricted to a configuration in which the latch hooks 5a are provided to project in the central axis direction of the thermostat 1 to latch from the outer side of the latch frames 4a as shown in this drawing, and a configuration in which the latch hooks 5a are provided to project outward from the thermostat 1 to latch from the inner side of the latch frames 4a may be adopted.

While preferable from the viewpoint of ease of assembly that, in this case, the length dimension L of the latch hooks 5a described above be formed less than the maximum gap dimension S2 between the spring 8 and lower frame 5, the configuration is not restricted thereto. That is to say, the length dimension L of the latch hooks 5a may be larger than the maximum gap dimension S2. When formed in this way, the latch hooks 5a, utilizing the interval with the spring 8 formed in a spiral shape, can be latched from the inner side of the latch frames 4a, and the latching between the upper frame 4 and lower frame 5 is not easily released in this latched state.

In addition, as shown in Fig. 2(b), the latch frames 4a (four in the drawing) of the upper frame 4 are formed to avoid the position in which the jiggle valve 11 is provided in the flange 4b. That is to say, when one latch hook 5a of the lower frame 5 latches to a position in which it is in contact with the jiggle valve 11, the other latch hooks 5a abut against an upright-provided component 4g of the latch frames 4a but do not latch thereto.

This configuration ensures that the upper and lower frame are correctly assembled and, in addition, that the jiggle valve 11 is reliably actuated free of the interference of the latch hooks 5a of the lower frame 5 on the jiggle valve 11.

The assembly process of the thermostat 1 will be described next with reference to Fig. 3. First, as shown in Fig. 3(a), an O-ring 6 is fitted on to an element main body 10 with a built-in thermally-expanding body 13, and the element main body 10 is further inserted in the spring holder 9.

Furthermore, as shown in Fig. 2(b), a thermoelement 2 is configured by the introducing of a piston 3 into a piston hole 10b formed in the apex part of the element main body 10.

Next, as shown in Fig. 2(c), an upper frame 4 is positioned to cover the thermoelement 2. A jiggle valve 11 is fitted and attached in advance into a hole 4d for the jiggle valve formed in a flange 4b of the upper frame 4.

On the other hand, the thermoelement 2 to which a spring holder 9 is attached is inserted into the inner side of the spring 8 and, furthermore, in a state in which a spring 8 is compressed by the lower side frame 5, the lower frame 5 latches with the upper frame 4.

As shown in Fig. 2(d), the thermostat 1 is completed by the fitting of a rubber ring 12 on to a protruding part 4c formed in the perimeter edge of the flange 4b of the upper frame 4 (Fig. 2(e)).

The provision of the component parts from a constant direction as described above ensures that the steps for the assembly of the thermostat 1 can be easily implemented. Therefore, the assembly time can be shortened and the cost of the manufacturing equipment and the product itself can be reduced.

In addition, because the upper and lower frame are formed from an elastic material and are latched utilizing this elasticity, they can also be easily disassembled. Therefore, productivity is improved and, if it is determined through characteristic testing following assembly that the thermoelement is unsuitable, the frame can be easily disassembled in order to replace the element, and a uniformity of product characteristics can be easily achieved.

The actuation of the thermostat 1 will be described next with reference to Fig. 4.

The thermostat 1 shown in Figs. 4(a) and (b) is employed in a housing 30. A passage 31 for cooling water from the engine side, a passage 32 for cooling water to the radiator side, and a bypass passage 33 for cooling water to the engine side are respectively connected to the housing 30.

The thermostat 1 is installed in the housing 30 so that the housing is roughly divided into top and bottom by a flange 4b of the upper frame 4. That is to say, the flange 4b blocks the radiator side passage 32 from the engine side passage 31 and bypass passage 33.

In this state the cooling water flowing in from the engine side, that is to say, the cooling water flowing into the housing 30 from the engine side passage 31 contacts the thermoelement 2 of the thermostat 1.

The expansion change of the thermally-expanding body built into the thermoelement 2 is small when the temperature of the cooling water is less than a prescribed temperature and, as a result, the closed state of the flanged valve 7 is established as shown in Fig. 4(a). The opened state of the bypass passage 33 and the closed state of the radiator side passage 32 is established by the bypass valve 9b at this time and, as a result, the cooling water flowing in from the engine side does not flow into the radiator side but instead is directly circulated to the engine side by way of the bypass passage 33.

On the other hand, when the temperature of the cooling water is higher than a prescribed temperature, the piston 3 is extended as shown in Fig. 4(b) by the expansion change of the thermally-expanding body built into the thermoelement 2 and, as a result, the thermoelement 2 is pressed down to establish the opened state of the flanged valve 7. In addition, the bypass valve 9b is pressed downward at this time to establish the closed state of the bypass passage 33.

Accordingly, because the closed state of the bypass passage 33 and the opened state of the radiator passage 32 are established by the bypass valve 9b, the cooling water flowing in from the engine side flows to the radiator side whereupon, subsequent to the lowering of the temperature thereof in the radiator, it is circulated to the engine side.

According to the embodiment described above, because the upper and lower frames 4, 5 are formed from an elastic material and are latched utilizing this elasticity, the thermostat 1 can be easily assembled and disassembled. For this reason, productivity is improved and, if it is determined through characteristic testing following assembly that the thermoelement is unsuitable, the frame can be easily disassembled in order to replace the element, and a uniformity of product characteristics can be easily achieved.

In addition, as described above, compared with a conventional frame made of metal, the forming of the upper and lower frames 4, 5 from a material formed by the press-molding of, for example, a resin or metal thin plate reduces the weight and reduces the costs of the thermostat.

In addition, the employing of an O-ring 6 in the flanged valve 7 produces lower manufacturing costs, easier assembly and better productivity by comparison with conventional thermostats based on the annealing of a rubber member. In addition, because a spring-receiving part 9a is interposed between the O-ring 6 and a spring 8, the elastic forces of the spring 8 are not directly exerted on the O-ring 6 and, instead, the elastic forces on the O-ring 6 are uniformized by the spring-receiving part 9a to ensure the crush width of the O-ring 6 is always constant and prevent non-uniform deformation of the O-ring 6.

In addition, because the diameter (outer diameter) of the spring 8 is formed to be substantially identical to the diameter of the flanged valve 7 (spring-receiving part 9a), sliding discrepancies caused by tilting of the flanged valve 7 can be prevented to ensure stable valve actuation.

In addition, the forming of the length of the latch hooks 5a for the latching of the upper frame 4 and lower frame 5 in a prescribed dimension prevents the release of the latched upper frame 4 and lower frame 5 in the housing 30.

Furthermore, because the latch frames 4a are formed avoiding the position in which the jiggle valve 11 is provided in the flange 4b, the latch hooks 5a of the lower frame 5 do not interfere with the jiggle valve 11.

Moreover, because a plurality of communication holes 9c that allow the cooling water to contact the element main body 10 are formed in the spring holder 9, the cooling water is able to contact the element main body 10 by way of these communication holes 9c to suppress the temperature-sensitive precision of the thermoelement 2. Altering the diameter of these communication holes 9c changes the responsivity of the thermoelement 10, and thermostats of a variety of responsivities can be manufactured by adjusting this dimension.

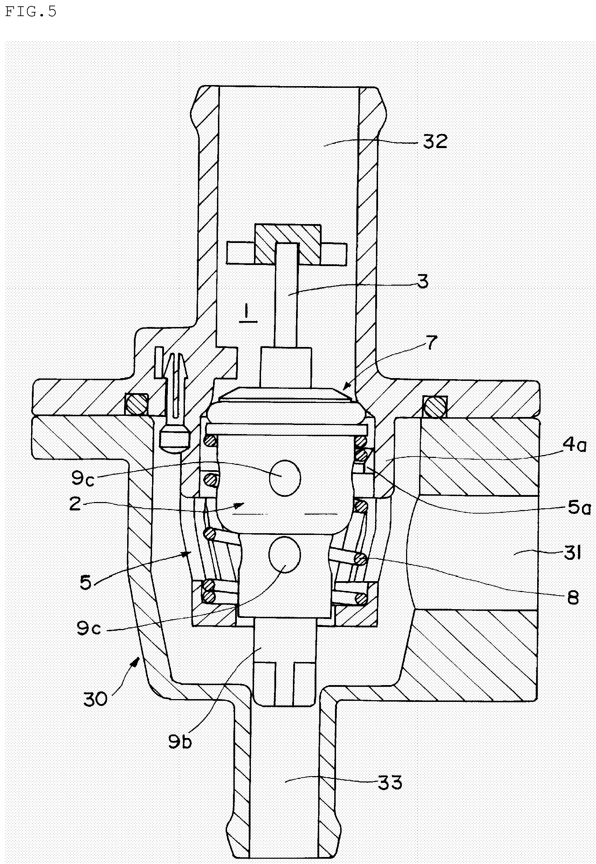

Because the lower frame 5 comprising at least the latch hooks 5a is formed from an elastic material (for example, a material formed by the press-molding of a resin or metal thin plate) it is able to be integrally formed with the upper frame 4 in the housing 30 as shown in Fig. 5. That is to say, with the latch frames 4a integrally formed with the housing 30, the thermostat 1 can be assembled easily in the housing 30 utilizing the elasticity of the lower frame 5.

### INDUSTRIAL APPLICABILITY

The present invention is suitable for employment in thermostats for variably controlling water temperature in, for example, a cooling water temperature control system for variably controlling the cooling water temperature of an internal combustion engine used in an automobile or the like.

## Claims

1. An apparatus comprising a thermostat (1) and a housing (30),
wherein said thermostat (1) is installed in said housing (30), and wherein said housing (30) is connected to a plurality of passages (31, 32, 33) through which a cooling water flows, said passages being linked or blocked by the actuation of a valve (7) in response to temperature changes of the cooling water,
wherein said thermostat (1) comprises: a thermoelement (2) having a piston (3) that slides up and down as a result of the temperature changes and a flanged valve (7) in its perimeter edge, said flanged valve (7) being actuated by the advancing and retreating action of said piston (3); a spring (8) which is arranged so as to surround said thermoelement (2) and one end of which elastically pressure-contacts the rear side of said flanged valve (7); an upper frame (4) in which a valve seat that abuts against the upper side of said flanged valve (7) is formed; and a lower frame (5) that is pressure-contacted by the other end of said spring (8),
wherein latch frames (4a) are formed in said upper frame (4) and a plurality of latch hooks (5a) that latch to said latch frames (4a) are formed in said lower frame (5), said upper frame (4) and said lower frame (5) being integrally formed by forming at least said lower frame (5) from an elastic material and utilizing the elasticity to latch and fix the latch hooks (5a) to said latch frames (4a),
**characterized in that**, in a state in which said upper frame (4) and said lower frame (5) are latched, the length dimension (L) of said latch hooks (5a) formed in the lower frame (5) is larger than the gap dimension (S1) between the lower frame (5) and the inner wall of said housing.

2. The thermostat according to claim 1, **characterized in that** a jiggle valve (11) for removing air bubbles is provided in said upper frame (4) and, when one of the latch hooks (5a) of said lower frame (5) is latched in a position in contact with said jiggle valve (11) of said upper frame (4), the other latch hooks (5a) abut against said latch frames (4a) but do not latch thereto.

3. The thermostat according to claim 1 or 2, **characterized in that** said thermoelement (2) comprises an element main body (10) in which a stepped part (10a) is formed in the perimeter edge thereof, and an O-ring (6) attached to the perimeter surface of said element main body (10) in a state of abutting against said stepped part (10a),
wherein said flanged valve (7) is configured from at least said stepped part (10a) and said O-ring (6).

4. The thermostat according to claim 1 or 2, **characterized in that** said thermoelement (2) further comprises a spring holder (9) provided within said spring (8), said spring holder (9) comprising a flanged spring-receiving part (9a) against which one end of said spring (8) abuts,
wherein said flanged valve (7) is configured from said stepped part (10a), said spring-receiving part (9a), and said O-ring (6) provided between said stepped part (10a) and said spring-receiving part (9a).

5. The thermostat according to claim 1 or 2, **characterized in that** the width dimension of the spring-receiving part (9a) of said spring holder (9) is substantially identical to the diameter dimension of said O-ring (6).

6. The thermostat according to claim 4 or 5, **characterized in that** a plurality of communication holes (9c) that allow contact of the cooling water on said element main body (10) are formed in said spring holder (9).

## Patentansprüche

1. Vorrichtung mit einem Thermostaten (1) und einem Gehäuse (30),
wobei der Thermostat (1) in dem Gehäuse (30) installiert ist, und wobei das Gehäuse (30) mit einer Vielzahl von Passagen (31, 32, 33) verbunden ist, durch die ein Kühlwasser strömt, wobei die Passagen durch die Betätigung eines Ventils (7) als Reaktion auf Temperaturänderungen des Kühlwassers miteinander verbunden oder blockiert werden,
wobei der Thermostat (1) aufweist: ein Thermoelement (2) mit einem Kolben (3), der als Ergebnis der Temperaturänderungen auf- und abgleitet, und einem Flanschventil (7) in seiner Außenkante, wobei das Flanschventil (7) durch die Vorschub- und Rückzugsbewegung des Kolbens (3) betätigt wird; eine Feder (8), die so angeordnet ist, dass sie das Thermoelement (2) umgibt und deren eines Ende die Rückseite des Flanschventils (7) elastisch druckkontaktiert; einen oberen Rahmen (4), in dem ein Ventilsitz ausgebildet ist, der an der Oberseite des Flanschventils (7) anliegt; und einen unteren Rahmen (5), der von dem anderen Ende der Feder (8) druckkontaktiert wird,
wobei in dem oberen Rahmen (4) Rastrahmen (4a) ausgebildet sind und im unteren Rahmen (5) mehrere Rasthaken (5a) ausgebildet sind, die an den Rastrahmen (4a) verrasten, wobei der obere Rahmen (4) und der untere Rahmen (5) integral ausgebildet sind, durch Bilden wenigstens des unteren Rahmens (5) aus einem elastischen Material und Verwendung der Elastizität, um die Rasthaken (5a) an den Rastrahmen (4a) zu verrasten und zu befestigen,
**dadurch gekennzeichnet, dass** in einem Zustand, in dem der obere Rahmen (4) und der untere Rahmen (5) verrastet sind, die Längenabmessung (L) der im unteren Rahmen (5) ausgebildeten Rasthaken (5a) größer als das Spaltmaß (Sl) zwischen dem unteren Rahmen (5) und der Innenwand des Gehäuses ist.

2. Thermostat nach Anspruch 1, **dadurch gekennzeichnet, dass** in dem oberen Rahmen (4) ein Rüttelventil (11) zum Entfernen von Luftblasen vorgesehen ist und, wenn einer der Rasthaken (5a) des unteren Rahmens (5) in einer Position in Kontakt mit dem Rüttelventil (11) des oberen Rahmens (4) verrastet ist, die anderen Rasthaken (5a) an den Rastrahmen (4a) anliegen, aber nicht daran verrastet sind.

3. Thermostat nach Anspruch 1 oder 2, **dadurch gekennzeichnet, dass** das Thermoelement (2) einen Elementhauptkörper (10), in dem in dessen Außenkante ein gestufter Teil (10a) ausgebildet ist, und einen O-Ring (6) umfasst, der an der Außenfläche des Elementhauptkörpers (10) in einem am gestuften Teil (10a) anliegenden Zustand angebracht ist,
wobei das Flanschventil (7) aus wenigstens dem gestuften Teil (10a) und dem O-Ring (6) aufgebaut ist.

4. Thermostat nach Anspruch 1 oder 2, **dadurch gekennzeichnet, dass** das Thermoelement (2) ferner einen innerhalb der Feder (8) vorgesehenen Federhalter (9) aufweist, wobei der Federhalter (9) einen angeflanschten Federaufnahmeteil (9a) aufweist, an dem ein Ende der Feder (8) anliegt,
wobei das Flanschventil (7) aus dem gestuften Teil (10a), dem Federaufnahmeteil (9a) und dem zwischen dem gestuften Teil (10a) und dem Federaufnahmeteil (9a) vorgesehenen O-Ring (6) aufgebaut ist.

5. Thermostat nach Anspruch 1 oder 2, **dadurch gekennzeichnet, dass** die Breitenabmessung des Federaufnahmeteils (9a) des Federhalters (9) im Wesentlichen identisch mit der Durchmesserabmessung des O-Rings (6) ist.

6. Thermostat nach Anspruch 4 oder 5, **dadurch gekennzeichnet, dass** in dem Federhalter (9) mehrere Verbindungslöcher (9c) ausgebildet sind, die einen Kontakt des Kühlwassers auf den Elementhauptkörper (10) ermöglichen.

## Revendications

1. Appareil comprenant un thermostat (1) et un boîtier (30),
dans lequel ledit thermostat (1) est installé dans ledit boîtier (30), et dans lequel ledit boîtier (30) est connecté à une pluralité de passages (31, 32, 33) à travers lesquels de l'eau de refroidissement s'écoule, lesdits passages étant reliés ou bloqués par l'actionnement d'une soupape (7) en réponse à des variations de la température de l'eau de refroidissement,
dans lequel ledit thermostat (1) comprend un thermo-élément (2) comprenant un piston (3) qui coulisse vers le haut et vers le bas en fonction des variations de la température et une soupape à bride (7) dans son bord périmétrique, ladite soupape à bride (7) étant actionnée par une action d'avancement et de recul dudit piston (3); un ressort (8) qui est agencé de manière à entourer ledit thermo-élément (2) et dont une extrémité se trouve en contact élastique par pression avec le côté arrière de ladite soupape à bride (7); un cadre supérieur (4) dans lequel un siège de soupape qui bute contre le côté supérieur de ladite soupape à bride (7) est formé; et un cadre inférieur (5) qui est touché par pression par l'autre extrémité dudit ressort (8),
dans lequel des cadres de verrouillage (4a) sont formés dans ledit cadre supérieur (4) et une pluralité de crochets de verrouillage (5a) qui se verrouillent auxdits cadres de verrouillage (4a) sont formés dans ledit cadre inférieur (5), ledit cadre supérieur (4) et ledit cadre inférieur (5) étant intégralement formés en formant au moins ledit cadre inférieur (5) à partir d'un matériau élastique et utilisant l'élasticité pour verrouiller et fixer les crochets de verrouillage (5a) auxdits cadres de verrouillage (4a),
**caractérisé en ce que**, dans un état dans lequel ledit cadre supérieur (4) et ledit cadre inférieur (5) sont verrouillés, la dimension de longueur (L) desdits crochets de verrouillage (5a) formés dans le cadre inférieur (5) est plus grande que la dimension d'espacement (S1) entre le cadre inférieur (5) et la paroi intérieure dudit boîtier.

2. Thermostat selon la revendication 1, **caractérisé en ce qu'**une soupape à vibrations (11) pour éliminer les bulles d'air est prévue dans ledit cadre supérieur (4) et, lorsque l'un des crochets de verrouillage (5a) dudit cadre inférieur (5) est verrouillé dans une position en contact avec ladite soupape à vibrations (11) dudit cadre supérieur (4), les autres crochets de verrouillage (5a) butent contre lesdits cadres de verrouillage (4a) mais ne se verrouillent pas à ceux-ci.

3. Thermostat selon la revendication 1 ou 2, **caractérisé en ce que** ledit thermo-élément (2) comprend un corps principal d'élément (10) dans lequel une partie étagée (10a) est formée dans le bord périmétrique de celui-ci, et un joint torique (6) attaché à la surface périmétrique dudit corps principal d'élément (10) dans un état de butée contre ladite partie étagée (10a),
dans lequel ladite soupape à bride (7) est configurée à partir d'au moins ladite partie étagée (10a) et ledit joint torique (6).

4. Thermostat selon la revendication 1 ou 2, **caractérisé en ce que** ledit thermo-élément (2) comprend en outre un support de ressort (9) prévu à l'intérieur dudit ressort (8), ledit support de ressort (9) comprenant une partie de réception de ressort à bride (9a) contre laquelle une extrémité dudit ressort (8) bute,
dans lequel ladite soupape à bride (7) est configurée à partir de ladite partie étagée (10a), ladite partie de réception de ressort (9a) et ledit joint torique (6) prévu entre ladite partie étagée (10a) et ladite partie de réception de ressort (9a).

5. Thermostat selon la revendication 1 ou 2, **caractérisé en ce que** la dimension de largeur de la partie de réception de ressort (9a) dudit support de ressort (9) est sensiblement identique à la dimension diamétrale dudit joint torique (6).

6. Thermostat selon la revendication 4 ou 5, **caractérisé en ce qu'**une pluralité de trous de communication (9c) qui permettent à l'eau de refroidissement d'entrer en contact avec ledit corps principal d'élément (10) sont formés dans ledit support de ressort (9).
